# EUROPÄISCHE PATENTSCHRIFT

(11) **EP 2 639 480 B1**
(45) Veröffentlichungstag und Bekanntmachung des Hinweises auf die Patenterteilung: **25.04.2018**
(21) Anmeldenummer: 13158704.0
(22) Anmeldetag: 12.03.2013
(51) Int. Cl.: F16K 1/44, F16K 1/46, F16K 15/14

(54) **Einseitig wirkende Abdichtung für Prozessventile**
Seal for process valves which is active on one side
Fermeture étanche active de façon unilatérale pour soupapes de procédé

(30) Priorität: 15.03.2012 DE 102012204071
(43) Veröffentlichungstag der Anmeldung: 18.09.2013
(73) Patentinhaber: Krones AG, 93073 Neutraubling (DE)
(72) Erfinder: Justl, Johann, 93073 Neutraubling (DE)
(74) Vertreter: Grünecker Patent- und Rechtsanwälte PartG mbB

(56) Entgegenhaltungen:
- EP-A1- 0 545 846
- DE-A1- 19 842 603
- DE-A1-102006 014 846
- DE-A1-102010 030 300
- GB-A- 344 686
- US-A- 1 953 007
- US-A- 2 306 012
- US-A- 4 856 551
- US-A1- 2010 072 411

## Beschreibung

### Stand der Technik

Die Erfindung betrifft ein Prozessventil der im Oberbegriff des Patentanspruchs 1 angegebenen Art.

Gegenwärtig werden an Dichtungen grenzende Hohlräume in Prozessventilen, wie sie insbesondere in Medienströmungswegen in der Lebensmittel-/Getränkeabfüllindustrie, aber auch in der Pharma- und Chemieindustrie verwendet werden, hermetisch abgedichtet, dass heißt bei einwandfreier Dichtung dringen weder Medienströme, wie z.B. Produkt- bzw. Lebensmittelströme, in das Prozessventil ein, noch dringen etwaig in besagten Hohlräumen vorhandene Medien aus dem Prozessventil in die Umgebung bzw. in die vom Prozessventil geleiteten Medienströmungswege aus.

Das Vorhandensein von Hohlräumen in Prozessventilen, wie z.B. Spalten, die an Dichtungen grenzen ist unter anderem z.B. dadurch bedingt, dass Ventilteller oft mehrteilig sind, und sich z.B. Spalten bzw. Hohlraume zwischen verschraubten Ventiltellerteilen bilden können. Ein Grund für diese mehrteilige Ventiltellerbauweise liegt unter anderem darin begründet, dass dies z.B. die Montage von Ringdichtungen in die Haltenut des Ventiltellers erleichtert, da die Ringdichtung weniger stark beim Einbau in die Haltenut verformt werden muss. Andere Gründe für Hohlräume im Ventilteller können wartungsbedingt angebrachte Verschraubungen z.B. von Ventilteller mit Ventilstange oder anderen Prozessventilbauteilen sein.

Wie erwähnt werden beschriebene Hohlräume in Prozessventilen in der Regel durch beidseitig abdichtende Dichtungselemente hermetisch verschlossen.

In der DE102010003445A1 wird z.B. ein Prozessventil als Sitzventil beschrieben mit einer innenliegenden Schraubverbindung von Ventilteilen, die das Innere des Sitzventils, insbesondere den Raum zwischen den Tellerteilen der an die Dichtung grenzt, nach außen hermetisch abdichtet.

Die DE102010030300A1 (siehe insbesondere Fig. 1) beschreibt ein Prozessventil als Doppelsitzventil mit einem mehrteiligem oberen Ventilteller und einen mehrteiligem unteren Ventilteller, bei dem etwaige zwischen den verschraubten Ventiltellerteilen vorhandene Hohlräume bzw. Spalten, die an Dichtungen grenzen, beidseitig nach innen und außen abgedichtet sind.

Nachteilig bei den bekannten Prozessventilen ist unter anderem, dass sich bei Temperaturänderungen unerwünscht Drücke innerhalb hermetisch gekammerter Hohlräume, die an die Prozessventilhauptdichtung grenzen, aufbauen können, die die Prozessventilhauptdichtung beschädigen bzw. in ihrer Funktion beinträchtigen können. Zudem wird das Erkennen von Leckagen bei defekter Hauptdichtung oder Undichtigkeiten der Einspannstellen der Hauptdichtung erschwert.

### Aufgabe

Es ist somit Aufgabe der Erfindung Prozessventile, insbesondere Prozessventile zur Verwendung in der Getränkeabfüllindustrie, zu verbessern, vor allem hinsichtlich Dichtungsverhalten und Wartbarkeit.

### Lösung

Dies wird erfindungsgemäß durch ein Prozessventil nach Anspruch 1 erreicht. Vorteilhafte Ausführungsformen und Weiterbildungen sind Gegenstand der Unteransprüche.

Ein erfindungsgemäßes Prozessventil in einem Medienströmungsweg, insbesondere zur Verwendung in der Getränkeabfüllindustrie, kann dabei wenigstens einen Ventilteller, wenigstens eine am Ventilteller liegende Hauptdichtung, wenigstens eine Nebendichtung, wenigstens einen von wenigstens einer Hauptdichtung und wenigstens einer Nebendichtung begrenzten Hohlraum mit wenigstens einer konisch zulaufenden Nut zur Aufnahme einer Nebendichtung beinhalten und sich dadurch auszeichnen, dass die Nebendichtung so eingebaut ist, dass sie nur einseitig abdichtet und durchlässig ist für Medien, die aus dem Hohlraum herausströmen.

In anderen Worten zeichnet sich also beschriebene Nebendichtung dadurch aus, dass die Nebendichtung gegenüber Medien, welche die Nebendichtung in Verjüngungsrichtung der konische zulaufenden Nut anströmt, abdichten kann, während die Nebendichtung Medien, die die Nebendichtung in Richtung der Verbreiterungsrichtung der konisch zulaufenden Nut anströmen, durchlassen kann.

Die Nebendichtung kann dabei so beschaffen sein, dass sie nur bei Überschreiten einer Druckdifferenz von 0.01, 0.1, 0.5 oder 1 bar zwischen dem Druck im Inneren des Hohlraums, der von einer Hauptdichtung und einer Nebendichtung begrenzt werden kann, und dem Druck im Raum außerhalb des von der Nebendichtung begrenzten Hohlraums, einseitig undicht werden kann und Medien aus dem Hohlraum über die Nebendichtung ausströmen können.

Dies hat unter anderem den Vorteil, dass Leckagen eines Hauptventil schneller und leichter erkannt werden kann, da das die undichte Hauptdichtung hinterwandernde Medium über die einseitig abdichtend wirkende Nebendichtung beispielsweise leicht sichtbar in die Umgebung oder z.B. einen Leckageauffangraum austreten kann.

Zudem können vorteilhafterweise Druckänderungen, z.B. durch Temperaturänderungen, zwischen einem von einer Hauptdichtung und von einer Nebendichtung begrenzten Hohlraum, ausgeglichen werden, und es können so unnötige thermische und mechanische Belastungen einer Hauptdichtung, welche zur Beschädigung oder Funktionsbeeinträchtigung der Hauptdichtung führen können, minimiert werden.

Darüber hinaus kann gleichzeitig vorteilhafterweise vermieden werden, dass z.B. bei Reinigungsvorgängen, z.B. die Gefahr des Eindringens von Reinigungsflüssigkeit oder andere Flüssigkeiten oder unerwünschte Medien, in den Hohlraum zwischen Nebendichtung und Hauptdichtung, reduziert bzw. vermieden werden kann.

Daneben kann eine einseitig abdichtend wirkende Nebendichtung so beschaffen sein, dass sie seitens ihrer abdichtender Wirkung maximalen Drücken, bis zu 20, 30 oder 40 bar, wenigstens für kurze Zeil, d.h. wenigstens für 1, 5, oder 10 s, standhalten kann. Dies hat den Vorteil, dass auch bei Druckschlägen die Nebendichtung funktionstüchtig bleiben kann.

Unter dem Begriff Hohlraum sollen im Übrigen unter anderem beispielsweise Zwischenräume und/oder Spalten zwischen verschiedenen Prozessventilbauteilen, sowie Hohlräume und/oder Bohrungen innerhalb des gleichen Prozessventilbauteils verstanden werden.

Ebenso kann beispielsweise eine konisch zulaufende Nut zur Aufnahme einer Nebendichtung sowohl von Bauteilwänden, bzw. Bauteilwandteilen, verschiedener Prozessventilbauteile gebildet werden kann, oder von Bauteilwänden, bzw. Bauteilwandteilen, des gleichen Prozessventilbauteils.

Die Hauptdichtung(en) des Prozessventils kann/können dabei als radiale oder axiale Sitzdichtung(en) und/oder als Sitzdichtung(en) mit gleichzeitiger radialer und axialer Dichtwirkung ausgeführt sein/werden.

Ferner sei angemerkt, dass unter dem Begriff Nebendichtung, im Folgenden immer eine einseitig abdichtend wirkende Nebendichtung verstanden werden soll.

Eine Nebendichtung kann mit Vorspannung in eine konisch zulaufende Nut eingebaut werden, wobei der Öffnungswinkel der konisch zulaufenden Nut zwischen 15 ° und 45 ° liegen kann.

Der durch die Nebendichtung in Richtung der Verbreiterungsrichtung der konisch zulaufenden Nut anströmende Medien erzeugte Druck, kann dabei die Nebendichtung in Richtung der Verbreiterungsrichtung der konisch zulaufenden Nut drücken bzw. verformen, so dass die Nebendichtung in Richtung der Verbreiterungsrichtung der konisch zulaufenden Nut undicht werden kann.

Die Vorspannung der Nebendichtung kann dabei die Nebendichtung in die Nutschräge. bzw. Nut in Verjüngungsrichtung der konisch zulaufenden Nut, ziehen bzw. in dieser halten. Dies hat den Vorteil, dass die Nebendichtung nicht von Medien, die in Richtung der Verbreiterungsrichtung der konisch zulaufenden Nut anströmen, mitgerissen wird und/oder sich aus der konisch zulaufenden Nut löst.

Die Nebendichtung kann aber auch ohne Vorspannung in die konisch zulaufende Nut eingebaut werden und der Öffnungswinkel der konisch zulaufenden Nut kann zwischen 8 ° und 30 °, bevorzugt zwischen 12° und 18° liegen. Die Nebendichtung kann dabei jedoch verpresst in die Nut, bzw. verpresst zwischen den Nutwänden, eingebaut werden. Die Verpressung kann unter anderem z.B. durch die Eigenschwere des in Schwerkraftrichtung oberhalb der Nebendichtung liegenden Bauteilelementes, z.B. ein Ventiltellerteil, erzeugt werden, oder aber auch durch Verschraubung der Bauteile, welche die Nut bilden.

Bei aus dem Hohlraum herausströmenden, bzw. in Richtung der Verjüngungsrichtung der konischen Nut, anströmenden Medien dichtet die Nebendichtung ab und wird in die sich verjüngende Nut gepresst. Strömt hingegen von in Richtung der Verbreiterungsrichtung der konisch zulaufenden Nut ein Medium die Nebendichtung an, kann sich die Nebendichtung durch den Druck des anströmenden Mediums weiter in Richtung der Verbreiterungsrichtung der konisch zulaufenden Nut schieben und so durch einen teilweisen Verlust der Verpressung die Nebendichtung durchlässig werden für besagtes aus dem Hohlraum heraus anströmendes Medium.

Die Nebendichtung kann so beschaffen sein dass Ihre Verformung unter Druckeinwirkung, z.B. Druckdifferenzen von bis zu 0.1, 1 oder 10 bar zwischen dem Druck im Inneren des Hohlraums, der von einer Hauptdichtung und einer Nebendichtung begrenzt werden kann, und dem Druck im Raum außerhalb des von der Nebendichtung begrenzten Hohlraums erzeugt z.B. durch aus dem Hohlraum heraus anströmende Medien, die halbe mittlere Schnurdicke der Nebendichtung nicht übersteigt.

Dies erschwert vorteilhafterweise, dass die Nebendichtung von aus dem Hohlraum herausströmenden Medien, bzw. in Richtung der Verbreiterungsrichtung der konisch zulaufenden Nut anströmenden Medien, mitgerissen wird und/oder aus der konisch zulaufenden Nut losgelöst wird.

Die Nebendichtung kann als Konturring, beispielsweise als ein O-Ring, ausgeführt sein.

Die Geometrie der Nebendichtung kann ein Rotationskörper sein, z.B. ein Torus, mit bevorzugt kreisförmigem oder ellipsenförmigem Querschnitt. Es sind aber auch andere Querschnittsgeometrien der Nebendichtung denkbar, wie z.B. trapezförmige Querschnitte.

Die Nebendichtung kann beispielsweise aus einem Elastomer, z.B. einem terpolymeren Elastomer wie EPDM (Ethylen-Propylen-Dien-Monomer), oder aus einem Thermoplast, z.B. PTFE (Polytetrafluorethylen), bestehen und Shorehärten zwischen 50 und 100, bevorzugt zwischen 60 und 80, aufweisen.

Die Steifheit bzw. Shorehärte der Nebendichtung kann ein Einknicken bzw. Mitreißen der Nebendichtung von in Richtung der Verbreiterungsrichtung der konisch zulaufenden Nut anströmenden Medien verhindern bzw. erschweren.

Die Nebendichtung kann in einem Prozessventil verwendet werden, welches als Einfachsitzventil mit einem ein- oder mehrteiligem Ventilteller ausgeführt ist

Bei einem als Einfachsitzventil ausgeführten Prozessventil mit einem ein- oder mehrteiligem Ventilteller kann sich ein von einer Hauptdichtung und einer Nebendichtung begrenzter Hohlraum teilweise bis zu dem Zwischenraum zwischen einer Ventilstange und einem Ventilstangengehäuse erstrecken und sich der Nebendichtungsbegrenzung, welche der Strömungsrichtung von Medien aus Richtung der Hohlraumes heraus abgewandt ist, eine Öffnung anschließen, durch die aus der einseitig abdichtenden Nebendichtung aus Richtung des Hohlrauminneren heraus anströmende Medien, in die Umgebung oder in ein Prozessventilgehäuseteil, z.B. einen Leckageauffangraum, austreten können.

Auf diese Weise können vorteilhafterweise leichter undichte Hauptdichtungen in Einfachsitzventilen erkannt, da bei undichten Hauptdichtungen auftretenden Leckagen leichter entdeckt werden können. Andererseits kann gleichzeitig vorteilhafterweise vermieden werden, dass z.B. bei Reinigungsvorgängen, z.B. Reinigungsflüssigkeit in den Hohlraum zwischen Nebendichtung und Hauptdichtung dringt.

Dabei sei angemerkt, dass eine Ventilstange in einem Prozessventil mit oder ohne Balancer ausgeführt sein kann.

Erfindungsgemäß kann eine Nebendichtung auch in einem Prozessventil ausgeführt als Doppelsitzventil mit einem ersten ein- oder mehrteiligem Ventilteller und einem zweiten ein-oder mehrteiligem Ventilteller verwendet werden.

Dabei kann sich z.B. zwischen dem ersten Ventilteller und dem zweiten Ventiltellers ein Zwischenhohlraum befinden, in den durch die Nebendichtung des oberen Ventiltellers und/oder die Nebendichtung des unteren Ventiltellers und/oder bei undichten Hauptdichtungen, durch die Hauptdichtung des oberen und/oder unteren Ventiltellers das Prozessventil anströmende Medien, eindringen und sich sammeln können.

Dieser Zwischenhohlraum kann also z.B. in Schließstellung vorteilhafterweise als Sicherheits- bzw. Leckageraum dienen.

Der Zwischenhohlraum kann zusätzlich über einen Abfluss verfügen, über den in den Zwischenraum eingedrungene Medien abfließen oder abgesaugt werden können.

Bei Sitzliftung bzw. Liftung des ersten oder zweiten Ventiltellers, kann vorteilhafterweise kein Medium in die Ventilteller, d.h. z.B. in einen Hohlraum begrenzt von einer Nebendichtung und einer Hauptdichtung innerhalb eines Ventiltellers dringen, und so z.B. das Eindringen von Reinigungsflüssigkeit, anderen Flüssigkeiten oder unerwünschte Medien, vermieden werden.

Beigefügte Figuren stellen beispielhaft zum besseren Verständnis und zur Veranschaulichung von Aspekten der Erfindung, dar:
**Fig. 1****:** Einseitig abdichtend wirkende Nebendichtung mit Vorspannung
**Fig. 2****:** Einseitig abdichtend wirkende Nebendichtung ohne Vorspannung
**Fig. 3****:** Einfachsitzventil
**Fig. 4****:** Doppelsitzventil

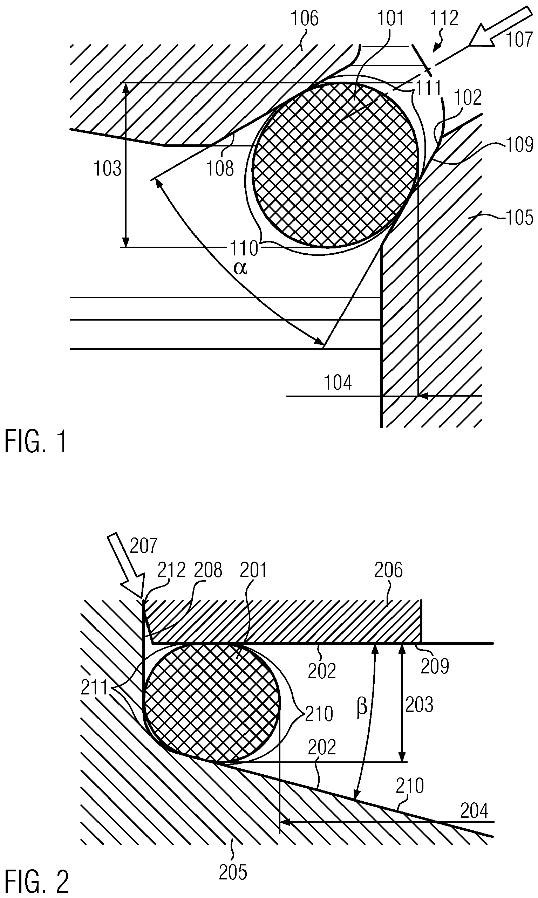

Die **Fig. 1** zeigt beispielhaft, wie eine einseitig abdichtend wirkende Nebendichtung 101 unter Vorspannung in eine konisch zulaufende Nut 102 eingebaut sein kann. Die Nutwände 108 und 109 können dabei von den Wänden bzw. Teilen der Wände von Bauteilen/Bauteilelementen 106 und 105 gebildet werden. Die Bauteilelemente 106 und 105 können dabei zu dem gleichen Bauteil oder zu verschiedenen Bauteilen gehören. Der Öffnungswinkel α der konisch zulaufenden Nut 102 für eine mit Vorspannung eingebaute Nebendichtung 101, kann beispielsweise zwischen 15 ° und 45 ° liegen.

Der zwischen Hauptdichtung (nicht dargestellt) und Nebendichtung 101 liegende Hohlraum 112 kann an der Nebendichtung 101 durch den als Nebendichtungsbegrenzung 111 (auch als innere Nebendichtungsbegrenzung benennbar) bezeichneten Teil der Nebendichtung 101 begrenzt werden. Der Teil der Nebendichtung 101, welche der Richtung 107, aus der aus dem Hohlraum 112 heraus Medien ausströmen können, abgewandt ist, ist hier als Nebendichtungsbegrenzung 110 (auch als äußere Nebendichtungsbegrenzung benennbar) eingezeichnet.

Bei einer Druckdifferenz von mindestens 0.01, 0.1, 0.5, 1 bar zwischen einem Druck, der an der inneren Nebendichtungsbegrenzung 111 liegt, und einem Druck, der an der äußeren Nebendichtungsbegrenzung 110 liegt, kann die Nebendichtung einseitig auf Seiten der inneren Nebendichtungsbegrenzung 111 durchlässig werden für Medien, die aus dem Hohlraum 112 heraus die Nebendichtung anströmen.

Die Nebendichtung 101 kann so beschaffen sein dass Ihre Verformung unter Druckeinwirkung, z.B. Druckdifferenzen von bis zu 0.1, 1 oder 10 bar zwischen dem Druck im Inneren des Hohlraums, der von einer Hauptdichtung und einer Nebendichtung begrenzt werden kann, und dem Druck im Raum außerhalb des von der Nebendichtung begrenzten Hohlraums erzeugt z.B. durch aus dem Hohlraum heraus anströmende Medien, die halbe mittlere Schnurdicke 103 der Nebendichtung 101 nicht übersteigt.

Auch kann die Vorspannung und/oder die Steifheit bzw. Shorehärte der Nebendichtung ein Einknicken bzw. Mitreißen der Nebendichtung in Strömungsrichtung 107 eines aus dem Hohlraum 112 herausströmenden Mediums bis zu Drücken von maximal 10, 20 oder 40 bar verhindern.

Die **Fig. 2** zeigt beispielhaft eine Nebendichtung 201, die ohne Vorspannung in eine konisch zulaufende Nut 202, aufgespannt zwischen den Nutwänden 209 und 210, eingebaut werden kann. Der von Nebendichtung 201 und Hauptdichtung (nicht dargestellt) begrenzte Hohlraum 212 kann z.B. in einen Spalt 208 zwischen Bauteilen 206 und 205 münden. Liegt an der äußeren Nebendichtungsbegrenzung 210, also dem Teil der Nebendichtung, der der Richtung 207, aus der Medien aus dem Hohlraum 212 bzw. Spalt 208 herausströmen können, abgewandt ist, ein Druck an, kann die Nebendichtung in Verjüngungsrichtung der Nut 202 gepresst werden und so gegenüber Medien, welche die äußere Nebendichtungsbegrenzung 210 anströmen, abdichten.

Die Nebendichtung 201 kann aber auch bereits verpresst eingebaut sein, z.B. durch die Eigenschwere eines Bauteils welches in Schwerkraftrichtung über der Nebendichtung liegt und beispielsweise die Nutwand/Nutdecke 209 zusammen mit der Nebendichtung 201 gegen die Nutwand/den Nutgrund 210 drückt, oder durch eine Verschraubung die die Nutwände 209 und 210 zusammendrücken kann und die eingeschlossene Nebendichtung 202 verpressen kann.

Der Öffnungswinkel β der konisch zulaufenden Nut für eine ohne Vorspannung eingebaute Nebendichtung kann dabei zwischen 8 ° und 30 °, bevorzugt zwischen 12 ° bis 18 ° liegen.

Strömt nun aus dem Hohlraum 212 bzw. dem Spalt 208 heraus, z.B. aus Richtung 207, ein Medium die Nebendichtung 201, bzw. die innere Nebendichtungsbegrenzung 211 an, kann sich die Nebendichtung, durch den Druck des anströmenden Mediums, weiter in Richtung der Verbreiterungsrichtung der konisch zulaufenden Nut schieben und so durch einen teilweisen Verlust der Verpressung die Nebendichtung durchlässig werden für besagtes aus dem Hohlraum 212 ausströmendes Medium.

Die Nebendichtung 201 kann so beschaffen sein dass Ihre Verformung unter Druckeinwirkung, z.B. Druckdifferenzen von 0.1 bis 10 bar zwischen dem Druck im Inneren des Hohlraums, der von einer Hauptdichtung und einer Nebendichtung begrenzt werden kann, und dem Druck im Raum außerhalb des von der Nebendichtung begrenzten Hohlraums erzeugt z.B. durch aus dem Hohlraum heraus anströmende Medien, die halbe mittlere Schnurdicke 203 der Nebendichtung 201 nicht übersteigt.

Auch kann die Steifheit bzw. Shorehärte der Nebendichtung kann ein Einknicken bzw. Mitreißen der Nebendichtung in Strömungsrichtung 207 eines aus dem Hohlraum 212 bzw. dem Spalt 208 herausströmenden Mediums bis zu Drücken von maximal 20, 30 oder 50 bar verhindern.

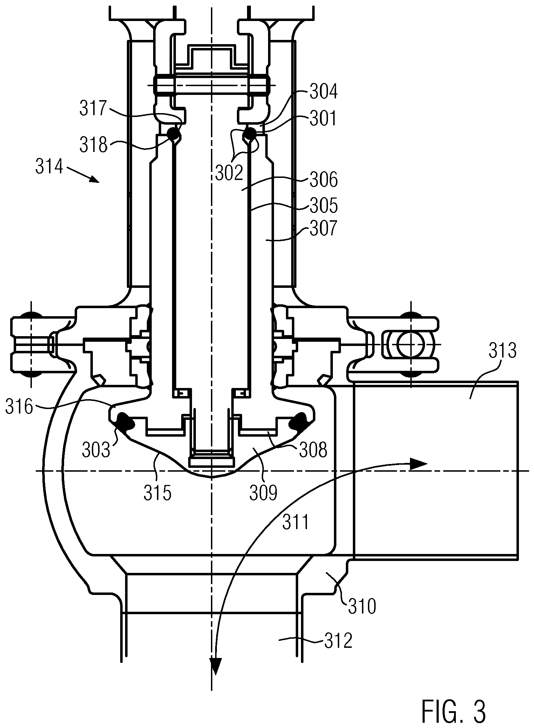

In **Fig. 3** ist beispielhaft ein Prozessventil als Einfachsitzventil 314 dargestellt, welches einen zweiteiligen Ventilteller 309 mit erstem Ventiltellerteil 315 und zweitem Ventiltellerteil 316 aufweisen kann.

Eine Hauptdichtung 303 und eine Nebendichtung 301 können einen Hohlraum 308 begrenzen, der sich zwischen den Ventiltellerteilen 315 und 316 befinden kann, sowie wenigstens teilweise den Zwischenraums 305 zwischen Ventilstange 306 und Ventilstangengehäuse 307 einschließen kann. Die Ventilstange 306 kann mit (wie dargestellt) oder ohne Balancer ausgeführt sein.

Aus dem Hohlraum 308 heraus strömende Medien, die beispielsweise über eine undichte Stelle der Hauptdichtung 303 in den Hohlraum 308 eindringen, können durch die Nebendichtung 301 und z.B. durch eine sich der Nebendichtung anschließende Öffnung 304 zwischen Ventilstange 306 und Ventilstangengehäuse 307 in die Umgebung oder in ein Prozessventilgehäuseteil, z.B. einen Leckageauffangraum, austreten.

Die konisch zulaufende Nut 302 zur Aufnahme der Nebendichtung 301 kann dabei z.B. von einem Teil 317 der Ventilstange 306 und einem Teil 318 des Ventilstangengehäuses 307 gebildet werden. Die Nebendichtung 301 kann dabei mit Vorspannung und/oder Verpressung in die konisch zulaufende Nut 302 eingebaut sein.

Auf diese Weise können vorteilhafterweise leichter undichte Hauptdichtungen in Einfachsitzventilen erkannt werden, da bei undichten Hauptdichtungen auftretenden Leckagen leichter entdeckt werden können. Andererseits kann gleichzeitig vorteilhafterweise vermieden werden, dass z.B. bei Reinigungsvorgängen des Ventiltellers 309, der Ventilstange 306 oder des Ventilstangengehäuses 307, Reinigungsflüssigkeit in den Hohlraum 308 zwischen Nebendichtung und Hauptdichtung dringt.

Im Übrigen stellt Fig. 3 beispielhaft ein Einfachsitzventil in geöffneter Stellung dar, bei der z.B. ein Medienfluss 311 zwischen den Rohren 312 und 313 fließen kann. Der Sitz 310 des Einfachsitzventils kann beispielsweise an Rohr 312 liegen.

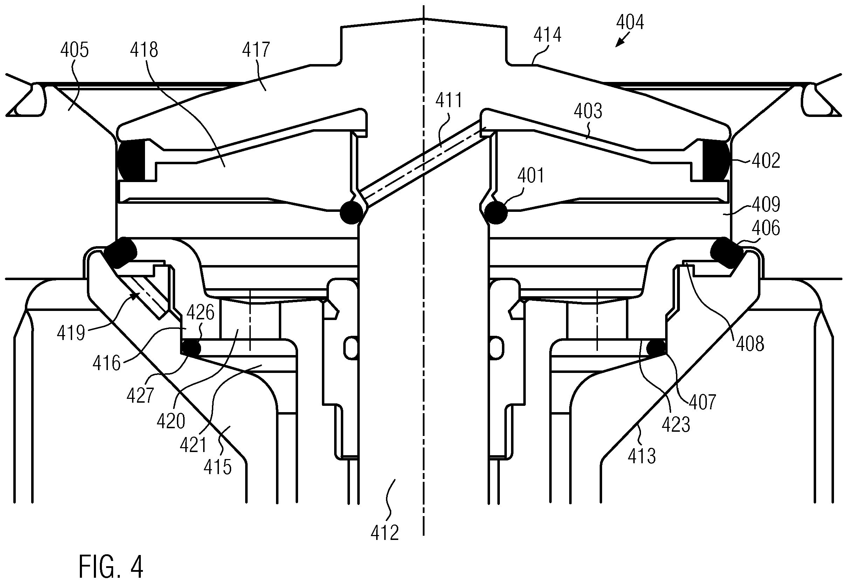

In **Fig. 4** ist beispielhaft ein Prozessventil als Doppelsitzventil 404 dargestellt. Ein Doppelsitzventil 404 kann dabei über einen ersten Ventilteller 414 und einen zweiten Ventilteller 413 verfügen. Die Ventilteller können mehrteilig sein. So kann z.B. der erste Ventilteller 414 ein erstes Ventiltellerteil 417 und ein zweites Ventiltellerteil 418 beinhalten, und ebenso der zweite Ventilteller 413 ein erstes Ventiltellerteil 416 und ein zweites Ventiltellerteil 418 aufweisen. Es ist dabei denkbar, dass die Ventiltellerteile eines Ventiltellers zusammen verschraubt werden können.

Der erste Ventilteller 414 kann über einen Hohlraum 403 verfügen, der von einer Hauptdichtung 402, welche z.B. radial wirkend ausgeführt sein kann, und einer Nebendichtung 401 begrenzt sein kann. Teile des Hohlraumes 403 können dabei als Bohrungen, z.B. Bohrung 411, ausgeführt sein, welche vorteilhafterweise evtl. durch eine undichte Stelle der Hauptdichtung 402 eindringende Medien, besser zur Nebendichtung 401 leiten können, von wo sie aus dem Hohlraum 403 wieder austreten können. Die Nebendichtung 401 kann dabei mit Vorspannung und/oder Verpressung in die konisch zulaufende Nut 422 eingebaut sein. Die Nutwände 424 und 425 der Nut 422 können dabei z.B. von einem Teil der Ventilstange 412 und einem Teil des zweiten Ventiltellerteils 418 gebildet werden. Es ist aber auch möglich, dass die Nutwände vom gleichen Bauteil, z.B. Ventiltellerteil 418, gebildet werden.

Auch der zweite Ventilteller 413 kann über einen Hohlraum 408 verfügen, der von einer Hauptdichtung 406, welche z.B. axial und/oder radial wirkend ausgeführt sein kann, und einer Nebendichtung 407 begrenzt sein kann. Teile des Hohlraumes 408 können dabei als Bohrungen, z.B. Bohrung 419, ausgeführt sein, welche vorteilhafterweise evtl. durch eine undichte Stelle der Hauptdichtung 406 eindringende Medien, besser zur Nebendichtung 407 leiten können, von wo sie aus dem Hohlraum 408 wieder austreten können und beispielsweise über einen Zwischenraum 421 zwischen erstem 420 und zweitem 415 Ventiltellerteil des zweiten Ventiltellers 413 abgeleitet werden können.

Die Nebendichtung 407 kann dabei mit Vorspannung und/oder Verpressung in die konisch zulaufende Nut 423 eingebaut sein. Die Nutwände 426 und 427 der Nut 423 können dabei z.B. von einem Teil des ersten Ventiltellerteils 416 und einem Teil des zweiten Ventiltellerteils 415 gebildet werden.

Zwischen dem ersten Ventilteller 414 und dem zweiten Ventilteller 413 kann sich ein Zwischenhohlraum 409 befinden, in den z.B. bei Schließstellung (wie dargestellt) des Doppelsitzventils, bei undichter Hauptdichtung 402 und/oder undichter Hauptdichtung 406 ein Medium in den Zwischenhohlraum 409 dringen kann.

Dabei kann z.B. zunächst bei undichter Hauptdichtung 402 ein Medium in Hohlraum 403 eindringen und über Nebendichtung 401 in den Zwischenholraum 409 austreten. Auch ist es in Schließstellung des Doppelsitzventils 404 bei undichter Hauptdichtung 402 möglich, dass z.B. ein Medium durch einen Spalt zwischen erstem Ventilteller und Sitz 405 des Doppelsitzventils 404 in den Zwischenhohlraum dringen kann.

Der Zwischenhohlraum 409 kann somit vorteilhafterweise als Sicherheitsraum zum Auffangen von Leckage dienen.

Durch eine Öffnung 420 im zweiten Ventilteller 413, bzw. im ersten Ventiltellerteil 420 des zweiten Ventiltellers 413, an die sich beispielsweise der Zwischenraum 421 zwischen erstem 420 und zweitem 415 Ventiltellerteil des zweiten Ventiltellers 413 anschließen kann, kann ein Medium aus dem Zwischenhohlraum 409 abfließen oder abgesaugt werden.

In geöffneter Stellung des Doppelsitzventils 404, z.B. beim Schalten oder beispielsweise zur Spülreinigung, und intakten Hauptdichtungen 402 und 406, verhindern die Nebendichtungen 401 und 407, dass ein Medium in die Hohlräume 403 und/oder 408 eindringen kann.

Die beschriebene einseitig abdichtend wirkende Nebendichtung, kann neben den oben beispielhaft aufgeführten Prozessventilen wie Einfachsitzventil und Doppelsitzventil auch z.B. in Schrägsitzventilen, Wechselventilen, Tankbodenventil oder Doppeldichtventil, bzw. in Prozessventilen mit Ventilteller, insbesondere mit mehrteiligen Ventiltellern, verwendet werden.

Es folgen 3 Blatt mit 4 Figuren.

Dabei sind die verwendeten Bezugszeichen wie folgt belegt:
**101, 201, 301** einseitig abdichtend wirkende Nebendichtung, auch einfach Nebendichtung genannt.
**111, 211** Nebendichtungsbegrenzung welche der Richtung von Medien, die aus Richtung eines von der Nebendichtung und einer Hauptdichtung begrenzten Hohlraumes heraus die Nebendichtung anströmen, zugewandt ist. Auch als innere Nebendichtungsbegrenzung benennbar.
**110, 210** Nebendichtungsbegrenzung welche der Richtung von Medien, die aus Richtung eines von der Nebendichtung und einer Hauptdichtung begrenzten Hohlraumes heraus die Nebendichtung anströmen, abgewandt ist. Auch als äußere Nebendichtungsbegrenzung benennbar.
**102, 202, 302, 422, 423** konisch zulaufende Nut zur Aufnahme einer Nebendichtung.
**105, 106, 205, 206** Bauteile / Bauteilelement / Teile des gleichen Bauteils oder verschiedener Bauteile, die eine konisch zulaufende Nut bilden, bzw. beherbergen.
**103, 203** Schnurdicke einer Nebendichtung.
**α** Öffnungswinkel der konisch zulaufenden Nut, zur Aufnahme einer mit Vorspannung eingebauten Nebendichtung.
**β** Öffnungswinkel der konisch zulaufenden Nut, zur Aufnahme einer ohne Vorspannung eingebauten Nebendichtung.
**104, 204** mittlerer Innendurchmesser einer Nebendichtung.
**108,109, 318, 317, 425, 424** Nutwand.
**209, 426** Nutwand / Nutdecke.
**210, 427** Nutwand / Nutgrund.
**208** Spalte zwischen Prozessventilbauteil, Teil eines von einer Nebendichtung und einer Hauptdichtung begrenzten Hohlraumes.
**107, 207** Richtung aus der Medien aus einem von einer Nebendichtung und einer Hauptdichtung begrenzten Hohlraum heraus strömen, d.h. Medien die z.B. eine undichte Hauptdichtung hinterwandert haben und in besagten Hohlraum eindringen.
**314** Prozessventil als Doppelsitzventil.
**303** Hauptdichtung.
**304** Öffnung / Aussparung.
**305** Zwischenraum zwischen Ventilstange und Ventilstangengehäuse.
**306** Ventilstange.
**307** Ventilstangengehäuse.
**308** von einer Hauptdichtung und einer Nebendichtung begrenzter Hohlraum.
**310** Sitz für ein Einfachsitzventil.
**311** möglicher Medienfluss.
**312, 313** Rohr zur vorgesehenen Leitung von Medien.
**309** zweiteiliger Ventilteller eines Einfachsitzventils.
**316** erstes Ventiltellerteil von Ventilteller 309.
**315** zweites Ventiltellerteil von Ventilteller 309.
**317** Teil der Ventilstange 306, welches einen Teil der konisch zulaufenden Nut 302 bildet.
**318** Teil des Ventilstangengehäuses 307, welches einen Teil der konisch zulaufenden Nut 302 bildet.
**404** Prozessventil als Doppelsitzventil.
**414** erster Ventilteller.
**417** erstes Ventiltellerteil, z.B. erste Ventiltellerhälfte, von erstem Ventilteller.
**418** zweites Ventiltellerteil, z.B. zweite Ventiltellerhälfte, von erstem Ventilteller.
**413** zweiter Ventilteller.
**416** erstes Ventiltellerteil, z.B. erste Ventiltellerhälfte, von zweitem Ventilteller.
**415** zweites Ventiltellerteil, z.B. zweite Ventiltellerhälfte, von zweitem Ventilteller.
**401** einseitig abdichtend wirkende Nebendichtung von erstem Ventilteller.
**407** einseitig abdichtend wirkende Nebendichtung von zweitem Ventilteller.
**402** Hauptdichtung, z.B. radial wirkend, an erstem Ventilteller.
**406** Hauptdichtung, z.B. axial und radial wirkend, an zweitem Ventilteller.
**409** Zwischenhohlraum zwischen erstem und zweitem Ventilteller.
**420** Öffnung / Abfluss für Zwischenhohlraum 409.
**421** Zwischenraum zwischen erstem und zweitem Ventiltellerteil des zweiten Ventiltellers, unter anderem z.B. zur Ableitung von Leckage oder Spülwasser.
**403** Hohlraum in erstem Ventilteller 414 begrenzt von Hauptdichtung 402 und Nebendichtung 401.
**408** Hohlraum in zweitem Ventilteller 413 begrenzt von Hauptdichtung 406 und Nebendichtung 407.
**411** als Bohrung ausgeführter Teil des Hohlraums 403.
**419** als Bohrung ausgeführter Teil des Hohlraums 408.
**412** Ventilstange.
**405** Sitz des Doppelsitzventils 404.

## Patentansprüche

1. Prozessventil für einen Medienströmungsweg, insbesondere zur Verwendung in der Getränkeindustrie, bzw. Pharma- Chemie- und Lebensmittelindustrie, beinhaltend wenigstens einen Ventilteller (309; 413, 414), wenigstens eine am Ventilteller liegende Hauptdichtung (303; 402, 406), wenigstens eine Nebendichtung (101; 201; 301; 401, 407), wenigstens einen von der wenigstens einen Hauptdichtung (303; 402, 406) und der wenigstens einen Nebendichtung (101; 201; 301; 401, 407) begrenzten Hohlraum (112; 212; 308; 403, 408) mit wenigstens einer konisch zulaufenden Nut (102; 202; 302; 423) zur Aufnahme der wenigestens einen Nebendichtung, **dadurch gekennzeichnet, dass** die Nebendichtung (101) so in die wenigstens eine konisch zulaufende Nut eingebaut ist, dass die Nebendichtung (101) nur einseitig abdichtet und durchlässig ist für Medien, die aus dem Hohlraum herausströmen.

2. Prozessventil nach Anspruch 1, **dadurch gekennzeichnet, dass** die Hauptdichtung(en) als radiale oder axiale Sitzdichtung(en) und/oder als Sitzdichtung(en) mit gleichzeitiger radialer und axialer Dichtwirkung ausgeführt ist/sind.

3. Prozessventil nach Anspruch 1 oder 2, **dadurch gekennzeichnet, dass** die Nebendichtung (101) mit Vorspannung in die konisch zulaufende Nut (102) eingebaut ist und der Öffnungswinkel (α) der konisch zulaufenden Nut (102) zwischen 15 ° und 45 ° liegt.

4. Prozessventil nach Anspruch 1 oder 2, **dadurch gekennzeichnet, dass** die Nebendichtung (201) ohne Vorspannung in die konisch zulaufende Nut (202) eingebaut ist und der Öffnungswinkel (β) der konisch zulaufenden Nut (202) zwischen 8 ° und 30 °, bevorzugt zwischen 12 ° und 18 ° liegt.

5. Prozessventil nach einem der vorigen Ansprüche, **dadurch gekennzeichnet, dass** das die Nebendichtung ein Konturring, beispielsweise ein O-Ring, ist.

6. Prozessventil nach einem der vorigen Ansprüche, **dadurch gekennzeichnet, dass** die Nebendichtung so beschaffen ist, dass Ihre Verformung unter Druckeinwirkung, z.B. Druckdifferenzen von bis zu 0.1, 1 oder 10 bar zwischen dem Druck im Inneren des Hohlraums, der von einer Hauptdichtung und einer Nebendichtung begrenzt werden kann, und dem Druck im Raum außerhalb des von der Nebendichtung begrenzten Hohlraums, die halbe mittlere Schnurdicke (103, 203) der Nebendichtung (101, 201) nicht übersteigt.

7. Prozessventil nach einem der vorigen Ansprüche, **dadurch gekennzeichnet, dass** das Prozessventil ein Einfachsitzventil (314) mit einem ein- oder mehrteiligem Ventilteller (315) ist.

8. Prozessventil nach Anspruch 7, **dadurch gekennzeichnet, dass** sich der Hohlraum (308) teilweise bis zu dem Zwischenraum (305) zwischen einer Ventilstange (306) und einem Ventilstangengehäuse (307) erstreckt, und sich der Nebendichtungsbegrenzung, welche der Strömungsrichtung von Medien aus Richtung des Hohlraums heraus abgewandt ist, eine Öffnung (304) anschließt, durch die aus der einseitig abdichtenden Nebendichtung aus Richtung des Hohlrauminneren ausströmende Medien, in die Umgebung oder in ein Prozessventilgehäuseteil, z.B. einen Leckageauffangraum, austreten können.

9. Prozessventil nach einem der vorigen Ansprüche 1 bis 6, **dadurch gekennzeichnet, dass** das Prozessventil ein Doppelsitzventil (404) mit einem ersten ein- oder mehrteiligem Ventilteller (414) und einem zweiten ein- oder mehrteiligem Ventilteller (413) ist.

10. Prozessventil nach Anspruch 9, **dadurch gekennzeichnet, dass** sich zwischen dem ersten Ventilteller (414) und dem zweiten Ventilteller (413) ein Zwischenhohlraum (409) befindet, in den, durch die Nebendichtung (401) des ersten Ventiltellers (414) und/oder die Nebendichtung (407) des zweiten Ventiltellers (413) und/oder, bei undichten Hauptdichtungen, durch die Hauptdichtung (402, 406) des ersten und/oder zweiten Ventiltellers das Prozessventil anströmende Medien eindringen und sich sammeln können.

11. Prozessventil nach Anspruch 10, **dadurch gekennzeichnet, dass** der Zwischenhohlraum (409) über einen Abfluss (420) verfügt, über den in den Zwischenraumhohlraum (409) eingedrungene Medien abfließen oder abgesaugt werden können.

12. Prozessventil nach einem der vorigen Ansprüche, **dadurch gekennzeichnet, dass** die Nebendichtung(en) aus einem Elastomer, z.B. einem terpolymeren Elastomer wie Ethylen-Propylen-Dien-Monomer,oder aus einem Thermoplast,z.B. Polytetrafluorethylen, bestehen und Shorehärten zwischen 50 und 100, bevorzugt zwischen 60 und 80, aufweisen.

## Claims

1. Process valve for a media flow path, particularly for use in the beverage industry or pharmaceutical, chemical and food industry, comprising at least one valve disk (309, 413, 414), at least one primary seal (303, 402, 406) lying on the valve disk, at least one secondary seal (101, 201, 301, 401, 407), at least one hollow space (112, 212, 308, 403, 408) bounded by at the least one primary seal (303, 402, 406) and by the at least one secondary seal (101, 201, 301, 401, 407) and having at least one conically tapered groove (102, 202, 302, 423) for holding the at least one secondary seal, **characterised in that** the secondary seal (101) is incorporated in the least one conically tapered groove in such a manner that the secondary seal (101) seals on only one side and is permeable to media that flow out of the hollow space.

2. Process valve according to Claim 1, **characterised in that** the primary seal(s) is (are) executed as radial or axial seat seal(s) and / or as seat seal(s) with simultaneous radial and axial sealing effect.

3. Process valve according to Claim 1 or 2, **characterised in that** the secondary seal (101) is incorporated into the conically tapered groove (102) with initial tension and the aperture angle (α) of the conically tapered groove (102) lies between 15° and 45°.

4. Process valve according to Claim 1 or 2, **characterised in that** the secondary seal (201) is incorporated into the conically tapered groove (202) without initial tension and the aperture angle (β) of the conically tapered groove (202) lies between 8° and 30°, preferably between 12° and 18°.

5. Process valve according to one of the preceding claims, **characterised in that** the secondary seal is a contour ring, for example, an O-ring.

6. Process valve according to one of the preceding claims, **characterised in that** the secondary seal is provided in such a manner that its deformation under the effect of pressure, e.g., pressure differences of up to 0.1, 1 or 10 bar between the pressure in the interior of the hollow space that can be bounded by a primary seal and a secondary seal and the pressure in the space outside of the hollow space bounded by the secondary seal does not exceed half the mean cord thickness (103, 203) of the secondary seal (101, 201).

7. Process valve according to one of the preceding claims, **characterised in that** the process valve is a single seat valve (314) having a one-piece or multi-piece valve disk (315).

8. Process valve according to Claim 7, **characterised in that** the hollow space (308) extends partially up to the clearance (305) between a valve stem (306) and a valve stem housing (307), and connected to the secondary seal boundary, which is facing away from the flow direction of media from the direction of the hollow space, is an opening (304) through which media flowing out of the one-way secondary seal from the direction of the hollow space interior can escape into the surroundings or into a process valve housing part, e.g., a leakage collecting space.

9. Process valve according to one of the preceding Claims 1 to 6, **characterised in that** the process valve is a double seat valve (404) having a first one-piece or multi-piece valve disk (414) and a second one-piece or multi-piece valve disk (413).

10. Process valve according to Claim 9, **characterised in that** located between the first valve disk (414) and the second valve disk (413) is an intermediate hollow space (409) into which, via the secondary seal (401) of the first valve disk (414) and / or the secondary seal (407) of the second valve disk (413) and / or, in the event of leaky primary seals, via the primary seal (402, 406) of the first and / or second valve disk, media flowing against the process valve can penetrate and collect.

11. Process valve according to Claim 10, **characterised in that** the intermediate hollow space (409) has a run-off (420) via which media that has penetrated into the intermediate hollow space (409) can flow out or be suctioned off.

12. Process valve according to one of the preceding claims, **characterised in that** the secondary seal(s) is (are) made of an elastomer, e.g., a terpolymer elastomer such as ethylene propylene diene monomer, or of a thermoplast, e.g., polytetrafluoroethylene, and have Shore hardnesses between 50 and 100, preferably between 60 and 80.

## Revendications

1. Vanne de processus industriel pour un chemin d'écoulement de fluide, notamment destinée à être utilisée dans l'industrie des boissons, ainsi que dans l'industrie pharmaceutique, chimique et l'industrie des produits alimentaires, comprenant
au moins un obturateur de vanne (309; 413, 414),
au moins un joint d'étanchéité principal (303; 402, 406),
au moins un joint d'étanchéité auxiliaire (101; 201; 301; 401, 407),
au moins une cavité (112; 212; 308; 403, 408) délimitée par ledit au moins un joint d'étanchéité principal (303; 402, 406) et ledit au moins un joint d'étanchéité auxiliaire (101; 201; 301; 401, 407), et comprenant au moins une rainure (102; 202; 302; 423) se rétrécissant de manière conique et destinée à accueillir ledit au moins un joint d'étanchéité auxiliaire,
**caractérisée en ce que** le joint d'étanchéité auxiliaire (101) est monté dans la rainure se rétrécissant de manière conique, de façon telle que le joint d'étanchéité auxiliaire (101) n'assure une étanchéité que dans un seul sens et soit perméable pour les fluides, qui sont susceptibles de s'écouler de manière à sortir hors de la cavité.

2. Vanne de processus industriel selon la revendication 1, **caractérisée en ce que** le ou les joints d'étanchéité principal ou principaux est/sont réalisés en tant que joint(s) d'étanchéité de siège à action radiale ou axiale, et/ou en tant que joint(s) d'étanchéité de siège à action radiale et axiale simultanée.

3. Vanne de processus industriel selon la revendication 1 ou la revendication 2, **caractérisée en ce que** le joint d'étanchéité auxiliaire (101) est monté avec précontrainte dans la rainure (102) se rétrécissant de manière conique, et l'angle d'ouverture (α) de la rainure (102) se rétrécissant de manière conique, se situe entre 15° et 45°.

4. Vanne de processus industriel selon la revendication 1 ou la revendication 2, **caractérisée en ce que** le joint d'étanchéité auxiliaire (201) est monté sans précontrainte dans la rainure (202) se rétrécissant de manière conique, et l'angle d'ouverture (β) de la rainure (202) se rétrécissant de manière conique, se situe entre 8° et 30°, de préférence entre 12° et 18°.

5. Vanne de processus industriel selon l'une des revendications précédentes, **caractérisée en ce que** le joint d'étanchéité auxiliaire est un anneau de contour, par exemple un joint torique.

6. Vanne de processus industriel selon l'une des revendications précédentes, **caractérisée en ce que** le joint d'étanchéité auxiliaire est d'une conformation telle, que sa déformation sous l'action de la pression, par exemple des différences de pression allant jusqu'à 0,1, 1 ou 10 bar entre la pression à l'intérieur de la cavité, qui peut être délimitée par un joint d'étanchéité principal et un joint d'étanchéité auxiliaire, et la pression dans l'espace à l'extérieur de la cavité délimitée par le joint d'étanchéité auxiliaire, ne dépasse pas l'épaisseur de corde moyenne (103, 203) du joint d'étanchéité auxiliaire (101, 201).

7. Vanne de processus industriel selon l'une des revendications précédentes, **caractérisée en ce que** la vanne de processus industriel est une vanne à siège unique (314) avec un obturateur de vanne (315) en une ou plusieurs parties.

8. Vanne de processus industriel selon l'une des revendications précédentes, **caractérisée en ce que** la cavité (308) s'étend en partie jusqu'à l'espace intermédiaire (305) entre une tige de commande de vanne (306) et un corps de tige de vanne (307), et **en ce qu'**à la délimitation de joint d'étanchéité auxiliaire, qui est opposée à la direction d'écoulement de fluides de la direction sortant de la cavité, est raccordée une ouverture (304) à travers laquelle peuvent s'échapper des fluides s'écoulant hors de l'intérieur de la cavité au niveau du joint d'étanchéité auxiliaire assurant l'étanchéité dans un sens, pour aller s'écouler dans l'environnement ou dans une partie du corps de la vanne de processus industriel, par exemple une chambre de collecte de fuites.

9. Vanne de processus industriel selon l'une des revendications précédentes 1 à 6, **caractérisée en ce que** la vanne de processus industriel est une vanne à siège double (404) avec un premier obturateur de vanne (414) en une ou plusieurs parties, et un deuxième obturateur de vanne (413) en une ou plusieurs parties.

10. Vanne de processus industriel selon la revendication 9, **caractérisée en ce qu'**entre le premier obturateur de vanne (414) et le deuxième obturateur de vanne (413) se trouve une cavité intermédiaire (409), dans laquelle peuvent pénétrer et s'accumuler des fluides s'écoulant dans la vanne de processus industriel, en passant par le joint d'étanchéité auxiliaire (401) du premier obturateur de vanne (414) et/ou par le joint d'étanchéité auxiliaire (407) du deuxième obturateur de vanne (413), et/ou, dans le cas de joints d'étanchéité principaux non étanches, en passant par le joint d'étanchéité principal (402, 406) du premier ou du deuxième obturateur de vanne.

11. Vanne de processus industriel selon la revendication 10, **caractérisée en ce que** la cavité intermédiaire (409) dispose d'une évacuation (420) par laquelle les fluides s'étant introduits dans la cavité intermédiaire (409), peuvent s'évacuer ou être aspirés.

12. Vanne de processus industriel selon l'une des revendications précédentes, **caractérisée en ce que** le ou les joints d'étanchéité auxiliaire(s) sont réalisés en un élastomère, par exemple un élastomère terpolymère comme l'éthylène-propylène-diène monomère, ou bien en un thermoplastique comme par exemple le polytétrafluoroéthylène, et présentent des duretés Shore entre 50 et 100, de préférence entre 60 et 80.
